# EUROPEAN PATENT SPECIFICATION

(11) **EP 4 264 636 B1**
(45) Date of publication and mention of the grant of the patent: **09.10.2024**
(21) Application number: 21840883.9
(22) Date of filing: 17.12.2021
(51) Int. Cl.: G21C 3/356

(54) **SPACER GRID ELEMENT OF A NUCLEAR FUEL ASSEMBLY SPACER GRID, SPACER GRIDS AND NUCLEAR FUEL ASSEMBLY**
ABSTANDSGITTERELEMENT EINES ABSTANDSGITTERS FÜR KERNBRENNSTABBÜNDEL, ABSTANDSGITTER UND KERNBRENNSTABBÜNDEL
ÉLÉMENT DE GRILLE D'ESPACEMENT D'UNE GRILLE D'ESPACEMENT D'UN ENSEMBLE DE COMBUSTIBLE NUCLÉAIRE, GRILLES D'ESPACEMENT ET ENSEMBLE DE COMBUSTIBLE NUCLÉAIRE

(30) Priority: 21.12.2020 EP 20306640
(43) Date of publication of application: 25.10.2023
(73) Proprietor: Framatome, 92400 Courbevoie (FR)
(72) Inventor: BLANC, Pascal, 90408 NÜRNBERG (DE); MESSINGSCHLAGER, Marco, 91346 WIESENTTAL (DE); BARAN, Hakan, 90478 NÜRNBERG (DE); MARX, Veit, 91052 ERLANGEN (DE); SCHMIDT, Hagen, 91481 MÜNCHSTEINACH (DE)
(74) Representative: Lavoix
(86) International application number: PCT/EP2021/086584
(87) International publication number: WO 2022/136178

(56) References cited:
- EP-A1- 0 639 837
- DE-A1- 1 961 035
- US-A- 4 190 494

## Description

The present invention relates to a spacer grid element of a spacer grid of a nuclear fuel assembly.

A nuclear fuel assembly generally comprises fuel rods containing fissile materials and an armature for supporting the fuel rods. The armature comprises generally a lower nozzle and an upper nozzle spaced along an assembly axis, guide thimbles (also named guide tubes) connecting the lower nozzle to the upper nozzle, and spacer grids distributed along the guide thimbles. The fuel rods are positioned between the lower nozzle and the upper nozzle with the guide thimbles extending though the spacer grids, the latter being configured for supporting the fuel rods axially and transversely with maintaining the fuel rods in a transversely spaced relationship.

Each spacer grid may be made of a plurality of tubular spacer grid elements assembled together to form a spacer grid, each spacer grid element being configured for receiving respectively one of the fuel rods.

RU2138861 C1 discloses a spacer grid made of a plurality of tubular spacer grid elements. Each spacer grid element is of hexagonal contour with fuel rod supporting features distributed at 120°. An alternative spacer element is known from DE1961035A1.

A problem that may be encountered with spacer grids is the occurrence of fretting on the fuel rods at the points of contact of the fuel rods with the spacer grid, thus leading to fuel rod failure.

One of the aims of the invention is to provide a spacer grid element enabling to better support fuel rods, namely with improving fretting robustness and avoiding fuel rod failures.

To this end, the invention proposes a spacer grid element of a nuclear fuel assembly spacer grid, the spacer grid element defining a cell extending along an extension axis for receiving a nuclear fuel rod, the spacer grid element exhibiting a polygonal cross-section including at least three supporting sides distributed around the extension axis, wherein each supporting side comprises an inwardly protruding corrugation onto which is formed at least one spring for supporting a fuel rod extending through the spacer grid element.

A spring placed on an inwardly protruding corrugation has the advantage that the spring height can be easily adjusted to the cell and fuel rod dimensions. Besides, the corrugation limit the movability of the fuel rod in the cell. Furthermore, it provides a flow channel to improve the cooling of the fuel rod.

In other embodiments, the spacer grid element comprises one or several following optional features, taken individually or in any technically feasible combination:
- the spacer grid element comprises three supporting sides distributed at 120° around the extension axis;
- the spacer grid element comprises six supporting sides distributed at 60° around the extension axis;
- the spacer grid element comprises at least one non-supporting side;
- at least one supporting side or each supporting side is located between two non-supporting sides.
- at least one non-supporting side or each non-supporting side is flat or comprises an inwardly protruding corrugation;
- each spring is elongated along the extension axis and/or bridge-like;
- at least one spring or each spring is configured for an elongated contact with the fuel rod;
- at least one spring or each spring is configured for a point contact with the fuel rod in at least one point of contact;
- at least one spring or each spring is configured for a point contact with the fuel rod in one point of contact or two points of contact spaced one from the other along the spring;
- each spring has a non-rectilinear cross-section in each plane perpendicular to the extension axis;
- each spring comprises two adjacent wings extending side-by-side and inclined one relative to the other, the wings including a contact wing for contacting the fuel rod and a lateral wing laterally extending the contact wing;
- the lateral wing is flat;
- the lateral wing is of varying width along the length of the spring;
- the contact wing has a convex outer surface defining one contact line adapted to contact the fuel rod;
- the contact wing is of substantially constant width;
- the corrugation of each supporting side comprises one contact wall and two lateral connection walls adjacent to the contact wall and inclined relative to the contact wall;
- each spring has a contact wing formed in the contact wall of the corrugation onto which the spring is formed and a lateral wing formed in one connection wall of the corrugation onto which the spring is formed;
- the spacer grid element comprises two springs formed in the corrugation of each supporting side, the two springs extending along each other;
- the two springs formed in the corrugation of each supporting sides are formed between at least three slots including at least one central slot and at least two lateral slots, each spring being formed between the at least one central slot and at least one lateral slot;
- the lateral slot is D-shaped, C-shaped, I-shaped or S-shaped;
- the spacer grid element is manufactured individually and configured for forming a nuclear fuel assembly spacer grid comprising a plurality of such spacer grid element assembled together.

The invention also relates to a spacer grid for a nuclear fuel assembly, the spacer grid comprising a plurality of spacer grid elements as defined above, the spacer grid elements being assembled together to form the spacer grid.

The invention also relates to a spacer grid for a nuclear fuel assembly comprising a plurality of spacer grid elements as defined above and manufactured in a single piece of material, e.g. by additive manufacturing.

The invention also relates to a nuclear fuel assembly comprising a bundle of fuel rods and an armature for supporting the fuel rods, the armature comprising at least one spacer grid the spacer grids as defined above.

The invention and its advantages will be better understood on reading the following description that is given solely by way of non-limiting example and with reference to the appended drawings, in which:
- Figure 1 is a schematic side elevation view of a nuclear fuel assembly;
- Figure 2 is a partial top view of a spacer grid of the fuel assembly of Figure 1;
- Figure 3 is a partial perspective view of a spacer grid element of the spacer grid of Figure 2;
- Figure 4 is a top view of a spacer grid element according to a second embodiment;
- Figure 5 is a top view of a spacer grid element according to a third embodiment;
- Figures 6 and 7 are schematic side views of the supporting sides of a spacer grid element according to different embodiments;
- Figures 8-11 are front views of supporting sides of a spacer grid element according to different embodiments;
- Figures 12 - 14 are front views of non-supporting sides of a spacer grid element provided with corrugations according to different embodiments.

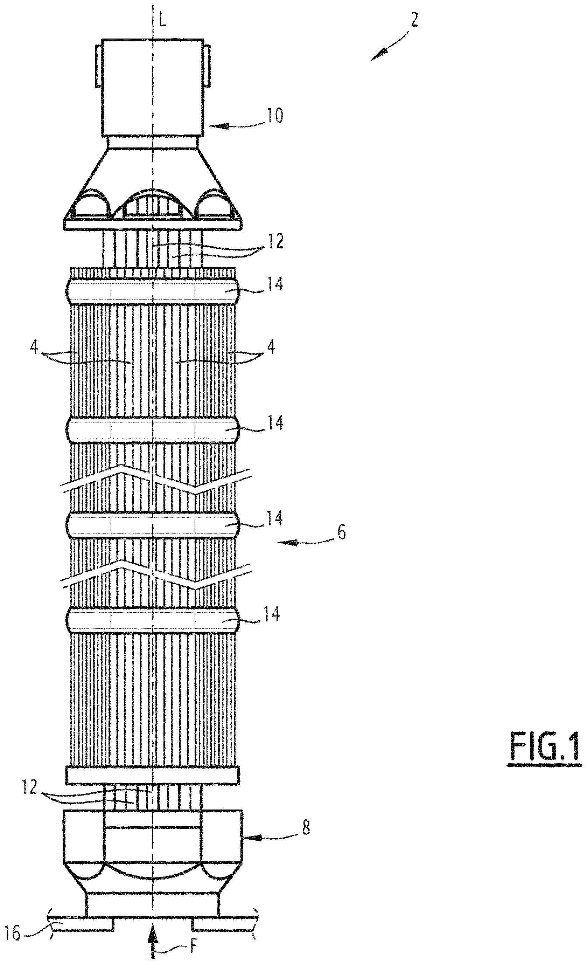

The nuclear fuel assembly 2 of Figure 1 comprises a bundle of nuclear fuel rods 4 and an armature 6 for supporting the fuel rods 4. The fuel assembly 2 is elongated along an assembly axis L.

The armature 6 comprises a lower nozzle 8, an upper nozzle 10, a plurality of guide thimbles 12 and a plurality of spacer grids 14.

The lower nozzle 8 and the upper nozzle 10 are spaced along the assembly axis L. The guide thimbles 12 extend parallel to assembly axis L and connect the lower nozzle 8 to the upper nozzle 10. Each guide thimble 12 opens upwards through the upper nozzle 10 for allowing insertion of a control rod (not shown) into the guide thimble 12.

The spacer grids 14 are distributed along the guide thimbles 12 and are secured to the guide thimbles 12, for instance by welding. Each spacer grid 14 extends transversely to the assembly axis L.

Each fuel rod 4 comprises for example a tubular cladding, pellets of nuclear fuel stacked inside the cladding and end plus closing the ends of the cladding (not shown).

Each fuel rod 4 extends parallel to the assembly axis L through the spacer grids 14, with being supported transversely and longitudinally relative to assembly axis L by the spacer grids 14. The fuel rods 4 are maintained in a transversely spaced relationship by the spacer grids 14.

In operation, the fuel assembly 2 is placed in the core of a nuclear reactor with the lower nozzle 8 resting on a bottom plate 16 of the core and the assembly axis L being substantially vertical. A coolant flows upwardly from an inlet of the bottom plate 16, through the lower nozzle 8 and between the fuel rods 4, the spacer grids 14 and the upper nozzle 10 as illustrated by arrow F on Figure 1, with flowing along the fuel rods 4.

The bundle of fuel rods 4 of the fuel assembly 2 exhibits preferably a hexagonal contour, the fuel rods 4 being maintained transversely in a space relationship with the fuel rod 4 located at the nodes on an imaginary hexagonal network.

The guide thimbles 12 are integrated in the bundle and received at nodes of the imaginary hexagonal network.

The nuclear fuel assembly 2 is for example designed for a VVER (acronym for Russian "Vodo-Vodianoï Energuetitcheski Reaktor"). The nuclear fuel assemblies 2 for VVER generally have fuel rods 4 arranged in a bundle having a hexagonal contour.

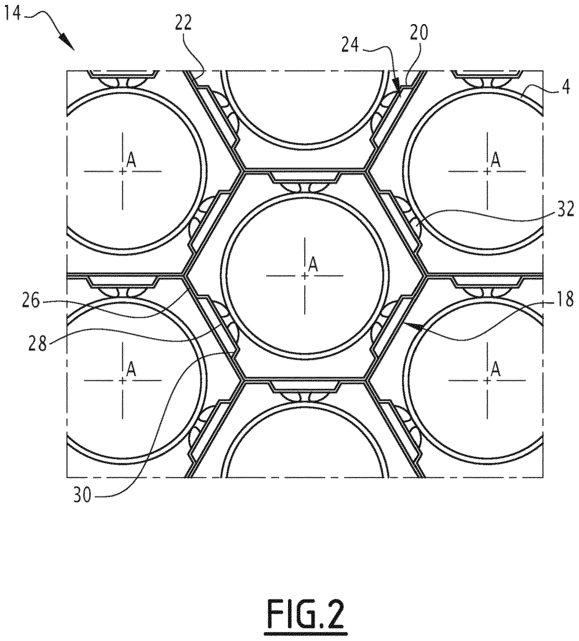

In the fuel assembly 2 represented on Figure 1, the spacer grids 14 are similar to each other and one spacer grid 14 will be further described with reference to Figure 2.

As illustrated on Figure 2, the spacer grid 14 comprises a plurality of spacer grid elements 18. Each spacer grid element 18 is tubular and defines a respective cell of the spaced grid 14, each spaced grid element 18 being configured for receiving a respective one of the fuel rods 4.

Figure 2 shows the spacer grid 14 only partially. More specifically, Figure 2 shows only a seven cells unit formed of seven spacer grid elements 18.

The spacer grid elements 18 are arranged at the nodes of an imaginary hexagonal network, and Figure 2 illustrates a unit of seven cells including one central spacer grid element 18 surrounded by six spacer grid elements 18 located at the corners of an imaginary hexagon.

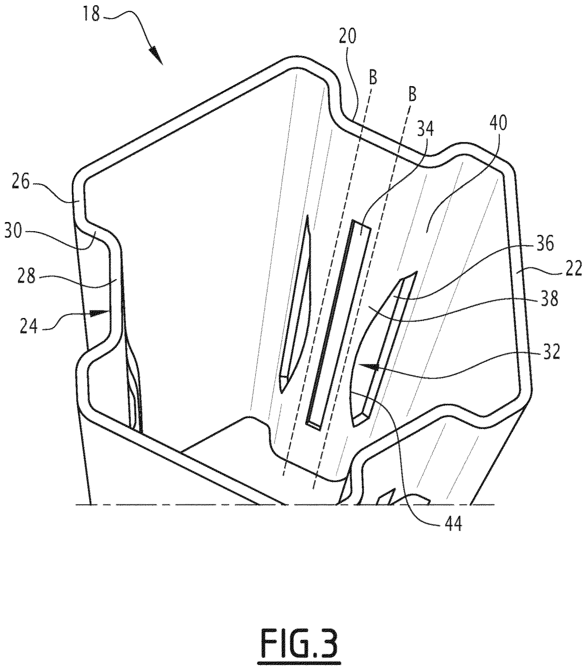

The spacer grid elements 18 of Figure 2 are similar and only one of them will be further described with reference to Figures 2 and 3.

The spacer grid element 18 extends along a respective extension axis A that is perpendicular to the plane of the spacer grid 14 (plane of Figure 2). The extension axis A is substantially parallel to the assembly axis L. The fuel rod 4 received in each spacer grid element 18 extends through this spacer grid element 18 along the extension axis A.

The spacer grid element 18 has a polygonal cross-section including at least two supporting sides 20 distributed around the extension axis A.

More specifically, the spacer grid element 18 has a pseudo-polygonal cross-section including at least two supporting sides 20 distributed around the extension axis A.

The term "pseudo-polygonal" is used to account for the fact that the cross-section has sides defining a contour of general polygonal shape, some sides being however not rectilinear in cross-section but round or provided with shapes, in particular corrugations, as it will be explained below.

Each supporting sides 20 is configured to contact the fuel rod 4 extending through the spacer grid element 18 for supporting said fuel rod 4.

In one embodiment, each side of the polygonal cross-section is a supporting side 20.

Alternatively, the spacer grid element 18 comprises at least one non-supporting side 22. Each non-supporting side 22 is configured for not contacting the fuel rod extending through the spacer grid element 18.

The spacer grid element 18 comprises for example at least one non-supporting side 22 located between two supporting sides 20.

The spacer grid element 18 comprises for example supporting sides 20 alternating with non-supporting sides 22. In such an example, each supporting side 20 is located between two adjacent non-supporting sides 22 and each non-supporting side 22 is located between two adjacent supporting sides 20.

In a particular embodiment, each spacer grid element 18 has a hexagonal cross-section with six sides including three supporting sides 20 distributed at 120° around the extension axis A alternating with three non-supporting sides 22.

Each supporting side 20 comprises an inwardly protruding central corrugation 24 located between two side walls 26. Each side wall 26 connects one edge of the central corrugation 24 to the adjacent side. Each adjacent side is a supporting side 20 or a non-supporting side 22 as a function of the configuration of the cell. In the illustrated example, each adjacent side is a non-supporting side 22.

Advantageously, the corrugation 24 extends all along the spacer grid element 18, that is from one end to the other of the spacer grid element 18 along the extension axis A.

Preferably, the side walls 26 of the supporting side 20 extends along the polygonal contour of the spacer grid element 18, and each central corrugation 24 is offset inwardly with respect to the polygonal contour of the spacer grid element 18.

On each supporting side 20, the central corrugation 24 comprises for example a central wall 28 and two lateral walls 30, each lateral wall 30 connecting the contact wall 28 to a respective side wall 26 of the supporting side 20.

The central wall 28 is offset inwardly with respect to side of the polygonal contour of the spacer grid element 18 corresponding to the supporting side 20.

As represented in Figure 2, the contact wall 28 and the two edge walls 26 are substantially parallel.

Each lateral wall 30 extends for example obliquely with respect to said side of the polygonal contour of the spacer grid element 18 for connecting to the corresponding side wall 26. The two lateral walls 30 extend from the central 28 with diverging one from the other towards the side walls 26.

In a view along the extension axis A of the spacer grid element 18, each lateral connection wall 30 is inclined relative to the contact wall 28, for example at an angle of 45°.

As the distance between the extension axis A and the spacer grid element 18 is at its minimum at each contact wall 28 of the corrugations 24, the fuel rod 4 extending through the spacer grid element 18 along the extension axis A is in contact only with the inwardly protruding corrugations 24 of supporting sides 20 of the spacer grid element 18.

Preferably, the corrugations 24 of the supporting sides 20 are identical. Only one of them will be further described.

At least one spring 32, and preferably two springs 32, are formed onto the corrugation 24, the spring(s) 32 being configured for supporting the fuel rod 4 extending inside the spacer grid cell 17.

Each spring 32 is for example elongated along the extension axis A and bridge-like.

As illustrated on Figure 3, each corrugation 24 is for example provided with a pair of springs 32. The two springs 32 extend along each other.

Each pair of springs 32 is formed in the corrugation 24 for example between a central slot 34 formed in the contact wall 28 and two lateral slots 36 each formed in one of the two connection walls 30 of the corrugation 24.

Each spring 32 is formed at the junction of a connection wall 30 and the contact wall 28, more specifically between one central slot 34 formed in the contact wall 28 and one lateral slot 36 formed in the connection wall 30.

As illustrated on Figure 3, in one exemplary embodiment, the central slot 34 is axially longer than the lateral slots 36.

Each spring 32 comprises for example a longitudinal contact wing 38 formed in the contact wall 28 and a longitudinal lateral wing 40 formed in one of the connection wall 30. The contact wing 38 and the lateral wing 40 extend over the whole length of the spring 32. The lateral wing 40 is inclined relative to the contact wing 38.

Advantageously, in an embodiment, each spring 32 has a non-rectilinear cross-section in each plane perpendicular to the extension axis A.

As illustrated on Figure 3, in each plane perpendicular to the extension axis A, the cross-section is arched with the concavity oriented inwardly providing on the contact wing 38 a convex contact surface for the contact with the fuel rod 4.

In one exemplary embodiment, each contact wing 38 is arched lengthwise. The contact wing 38 describes an arch in the lengthwise direction of the spring 32. The middle section of the contact wing 38 is closer to the extension axis A than the end sections of the contact wing 38.

Optionally, each contact wing 38 is arched transversely. The transverse concavity of each contact wing 38 is directed radially outwardly relative to the extension axis A.

Optionally, each contact wing 38 is also arched laterally towards the associated spring 32 of the pair of springs. The springs 32 of each pair are closer at their middle than at their axial ends.

Each contact wing 38 is preferably of substantially constant width along the length of the spring 32.

Each lateral wing 40 is preferably flat, with extending laterally from the corresponding contact wing 38 in the plane of the corresponding connection wall 30.

In one embodiment, as illustrated in figure 3, the width of the central slot 34 is of substantially constant width along its length and extends along a rectilinear line.

In one embodiment, as illustrated on figure 3, each lateral slot 36 is C-shaped. Each lateral slot 36 has a width increasing from the ends of the lateral slot 36 towards the center of the lateral slot 36. Each lateral slot 36 has a larger width in the center thereof.

The free longitudinal edge of each lateral wing 40 (along the lateral slot 36) is curvilinear and curved away from the junction zone 44 between the lateral wing 40 and the contact wing 38. The junction zone 44 is also curved away from the free longitudinal edge of each lateral wing 40 due to the curvature of the contact wing 38.

Each lateral wing 40 has a width varying along the length of the spring 32 and reaches its maximal width at its center. Each lateral wing 40 is larger at the center than at the ends.

In one embodiment, as illustrated on Figure 2 and 3, each spacer grid cell 17 is defined by a respective spacer grid element 18, the spacer grid element 18 being assembled to define the spaced grid 14.

Each spacer grid element 18 defines a respective fuel cell 17. Each spacer grid element 18 is a tube extending along the extension axis of the fuel cell 17 and having the cross-section of the spacer grid cell 17.

The spacer grid elements 18 are preferably made of zirconium alloy. In an alternative embodiment the spacer grid elements 18 are made of Ni-based alloy or of another material with high mechanical characteristics such as for instance Ph13.8 Mo.

As illustrated in Figure 2, in order to form a spacer grid 4, each side 20, 22 of each spacer grid element 18 is placed in contact with a side 20, 22 of another spacer grid element 18.

In an exemplary embodiment shown in figure 2, the spacer grid elements 18 are arranged such that, for each spacer grid element 18, each supporting side 20 of the spacer grid element 18 in contact with a side of another spacer grid element 18 is in contact with a non-supporting side 22 of said other spacer grid element 18. Each spacer grid element 18 is manufactured individually, for example by extruding or by sheet metal processing, bending and welding. A spacer grid 14 is then manufactured by welding a plurality of spacer grid elements 18 together. In an alternative embodiment, the spacer grid elements 18 are manufactured in a single piece of material, e.g. by additive manufacturing. The spacer grid elements 18 are all manufactured at once, thus forming the spacer grid 14.

In a preferred embodiment, in each pair of adjacent spacer grid elements 18, the two adjacent sides of the two spacer grid elements 18 are made in a single piece of material.

Advantageously, in case two spacer grid elements 18 are adjacent via two flat non-supporting sides 22, only one flat wall common to the two spacer grid elements 18 and defining the two non-supporting sides 22 is provided. This allows reducing material and avoid internal corrosion in between adjacent sides.

Advantageously, in case two adjacent spacer grid elements 18 are adjacent via a supporting side 20 of one of the two spacer grid cells 17 and non-supporting sides 22 of the other one of the two spacer grid elements 18, only one wall is manufactured.

This wall comprises a central corrugation 24 protruding inwardly with respect to one of the two spacer grid element 18 for defining the supporting side 20 and protruding outwardly with respect to the other spacer grid element 18 and defining the non-supporting side 22.

As shown in Figures 2 and 3, each non-supporting side 22 is for example flat. Each non-supporting side 22 extends along one respective side of the polygonal contour of the spacer grid element 18.

As illustrated on Figure 2, each fuel rod 4 is in contact with each spring 32 of each pair of springs of each corrugation 24 of the spacer grid element 18 in which the fuel rod 4 is inserted.

The springs 32 supports the fuel rod 4 transversely to the extension axis A to support the fuel rod 4 transversely and longitudinally by friction between the springs 32 and the fuel rod 4.

The provision of each spring onto a corrugation 24 of the spacer grid element 18 allows obtaining a spacer grid 4 that has appropriate mechanical features for supporting the fuel rods 4.

The corrugation 24 of each spacer grid element 18 reinforces the spacer grid, with forming box shaped structure, e.g. when applying a supporting side 20 of a spacer grid element to a non-supporting side 22 or a supporting side of another spacer grid element 18.

The springs 32 exhibit a 3D-shape that provides satisfactory support with reduced fretting risks.

The widthwise curved elongated springs 32 provide sufficient flexion stiffness for obtaining at least one line contact between the fuel rod 4 and each spring 32 over a length sufficient for limiting local contact stress. The contact between the springs 32 of each pair of springs 32 and the fuel rod 4 must be sufficiently strong while avoiding fretting, namely when the fuel rod 4 vibrates in use due to the high velocity fluid flow.

The lateral wing 40 being inclined relative to the contact wing 38 imparts flexion stiffness to the spring 32. The flexion stiffness of the spring 32 and the deformation of the spring 32 under load namely depend upon the inclination between the wings 38, 40, and upon the width of the lateral wing 40 along the spring 32.

The embedding of the fuel rod 4 in each spacer grid element 18 by the springs 32 enables an additional clamping of the fuel rod 4, which prevents the risk of fuel rod bow. This additional clamping enhances the overall fuel assembly stiffness and minimizes the sensitivity to fuel assembly bow.

The central slot 34 and the lateral slots 36 of each corrugation 24 define several openings in each spacer grid elements 18, which enable a hydraulic exchange between the different cells of the spacer grid 14.

The invention is not limited to the examples and variants presented above. Other examples and variants may be contemplated.

In the example presented above, each non-supporting side 22 of the spacer grid element 18 is flat or substantially flat.

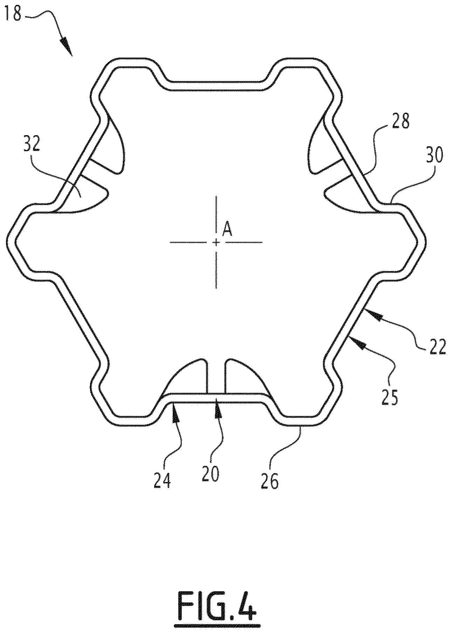

In an alternative embodiment, as illustrated in figure 4, each non-supporting side 22 of the spacer grid element 18 comprises an inwardly protruding central corrugation 25. Such a corrugation 25 can reinforce the non-supporting side 22.

Advantageously, the corrugation 25 extends all along the spacer grid element 18, that is from one end to the other of the spacer grid element 18 along the extension axis A.

In the example illustrated on Figure 3, the spaced grid element 18 exhibits a polygonal cross-section, in particular with a hexagonal cross-section, and comprises supporting sides 20 alternating with non-supporting sides 22,

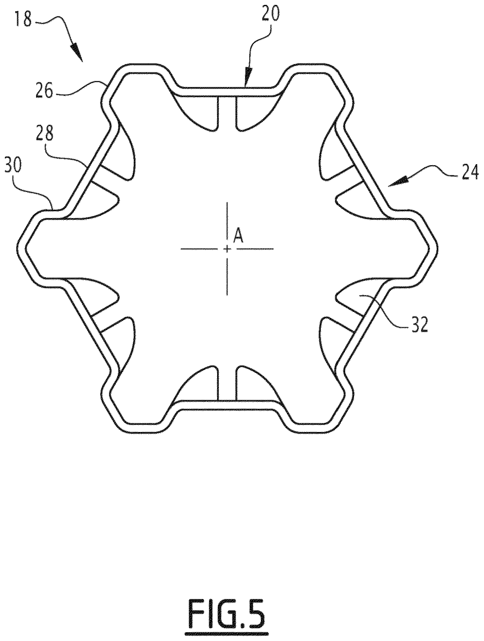

In an alternative embodiment, as illustrated in figure 5, the spaced grid element 18 exhibits a polygonal cross-section, in particular with a hexagonal cross-section, each sides of the polygonal cross-section being a supporting sides 20.

In a particular embodiment, as illustrated on figure 5, the spacer grid element 18 has a pseudo-hexagonal cross-section with six supporting sides 20 distributed at 60° around the extension axis A. Each supporting side 20, i.e. the six sides, is as described above, and comprises in particular an inwardly protruding central corrugation 24 located between two side walls 26 and provided with at least one spring 32.

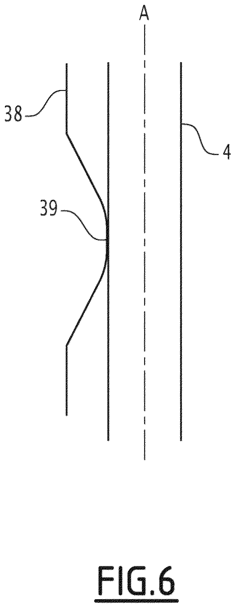

Advantageously, as illustrated on Figure 6, each spring 32 is configured for an elongated contact with the fuel rod 4 extending through the spacer grid element 18.

In particular, when the spring 32 comprises a contact wing 38, the contact wing 38 of each spring 32 is configured for contacting the fuel rod 4 along at least one line of contact 39 between the fuel rod 4 and the spring 32.

In one embodiment, each spring 32 is configured for an elongated contact with the fuel rod 4 along a one single line of contact.

In particular, when the spring 32 comprises a contact wing 38, the contact wing 38 of each spring 32 is configured for contacting the fuel rod 4 along a single line contact 39 between the fuel rod 4 and the spring 32.

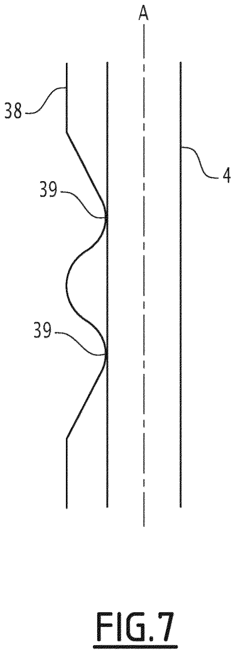

In another embodiment, as illustrated in figure 7, each spring 32 is configured for an elongated contact with the fuel rod 4 along at least two separate lines of contact.

In particular, the spring 32 has a W-shaped contact surface (e.g. the contact wing 38), so that two sections of the contact surface are closer to the extension axis A than the remainder of the spring 32 to define two separate contact lines 39 with the fuel rod 4.

The central slot 34 provided in a supporting side 20 between two springs 32 may exhibit different shapes.

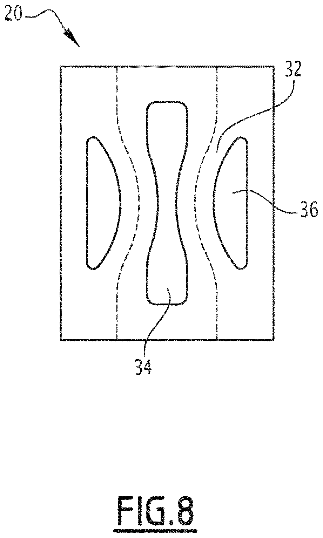

In on embodiment illustrated on Figure 8, the central slot 34 has a width that decreases from the axial ends of the central slot 34 to the middle of the central slot 34.

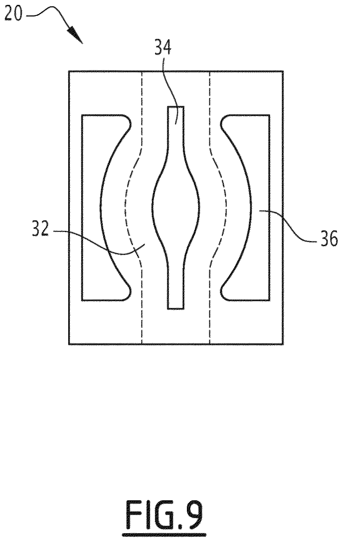

In an alternative embodiment illustrated in figure 9, the width of the central slot 34 increases from the axial end towards the middle of the central slot 34.

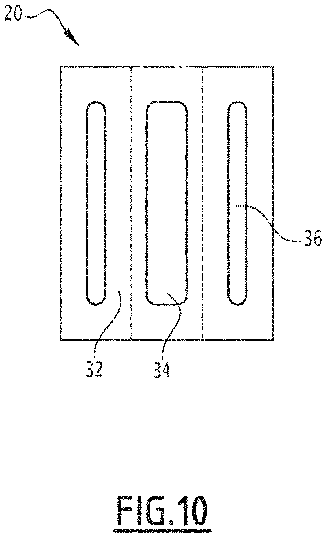

In an alternative embodiment illustrated in figure 10, the central slot 34 is I-shaped. The central slot 34 is of substantially constant width along its length and extends along a rectilinear line.

The laterals slots 36 provided in a supporting side 20 along springs 32 may exhibit different shapes.

In on embodiment illustrated on Figure 8, each lateral slot is C-shaped. It comprises a rectilinear edge and an arched edge opposed to the rectilinear edge. The arched edged is e.g. adjacent the spring 32, the rectilinear edge being opposite the spring 32.

In another embodiment illustrated on Figure 9, each lateral slot 36 is D-shaped. Each lateral slot 36 extends along an arcuate line.

In another embodiment illustrated on Figure 10, each lateral slot 36 is I-shaped. Each lateral slot 36 is of substantially constant width along its length and extends along a rectilinear line.

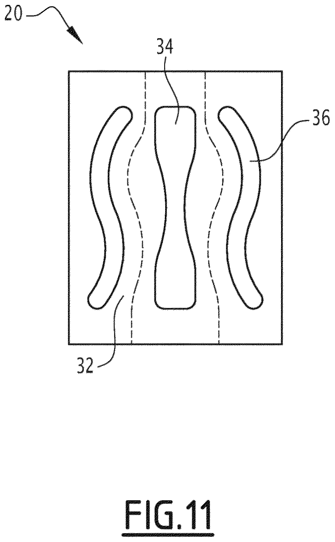

In an alternative embodiment illustrated in figure 11, each lateral slot 36 is S-shaped. It extends along a curvilinear line having two opposed curvatures along its length.

The invention is not limited to the illustrated embodiments, and the different shapes of central slot 34 and lateral slots 36 illustrated on the figures may be combined differently.

As illustrated on Figures 8 to 11, each spring 32 is formed between one central slot 34 and one lateral slot 36.

In an alternative embodiment, each spring 32 is formed between multiple central slots 34 and one lateral slot 36. In particular, each spring 32 is formed between two central slots 34 and one lateral slot 36. This embodiment allows to have a connection between the two springs 32, forming an H or a X-shape.

In an alternative embodiment, each spring 32 is formed between one central slot 34 and multiple lateral slots 36. The lateral slots 36 are, for example, I-shaped and are all aligned with each other.

The invention is not limited to the described embodiments and the different amounts of central slot 34 and lateral slots 36 described may be combined differently.

As illustrated on Figure 3, the corrugations 24 of the supporting sides 20 extends rectilinearly along the extension axis A.

Corrugations provided on the sides of the spacer grid elements 18,that corrugations 24 of supporting sides 20 or corrugations 25 of non-supporting sides 22 define channels for the coolant and may be used to orientate the coolant flow at the exit of the spacer grid.

Indeed, a corrugation 24, 25 provided in a supporting side 20 or a non-supporting side 22 of a spacer grid element 18 can be shaped such as to generate transverse flow of the coolant flowing through the spacer grid 14.

In this view, the corrugation 24, 25 can extend along the extension axis A with at least one end portion of the corrugation 24, 25 (corresponding to the downstream end of the spacer grid element 18 when considering the direction of flow of the coolant through the spacer grid 14) being inclined relative to the extension axis A. The angle of inclination is for example comprised between 0° and 15°.

In one example, the corrugation 24, 25 extends along a rectilinear line inclined relative to the extension axis A.

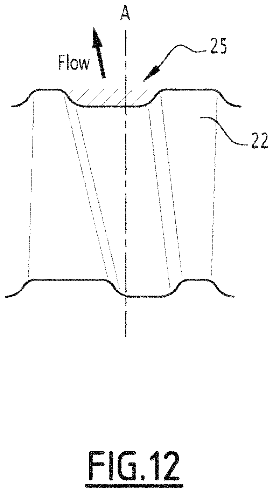

As illustrated in Figure 12, in one example, a corrugation 25 of a non-supporting side 22 extends along a rectilinear line ("I-shaped corrugation") inclined relative to the extension axis A. The downstream end of the corrugation 25 is in particular inclined relative to the extension axis A at a downstream end 25A of the corrugation.

In another example, the corrugation 24, 25 extends along a curvilinear line inclined relative to the extension axis A at least at the downstream end of the corrugation 24, 25.

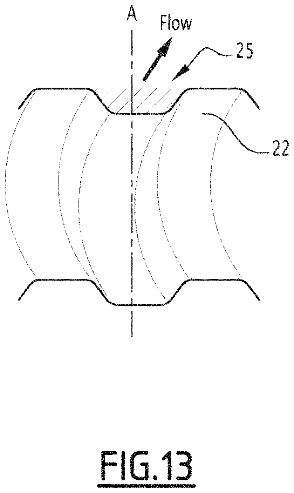

As illustrated in Figure 13, in one example, a corrugation 25 of a non-supporting side 22 extends along a arcuate line ("C-shaped corrugation").

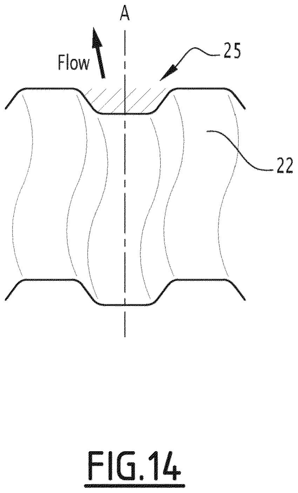

As illustrated on Figure 14, in one example, a corrugation 25 of a non-supporting side 22 extends along a curvilinear line with two opposed curvatures ("S-shaped" corrugation").

The example above may be applied to a corrugation 24 of a supporting side.

## Claims

1. Spacer grid element for
a nuclear fuel assembly spacer grid (14), the spacer grid element (18) defining a cell (17) extending along an extension axis (A) for receiving a nuclear fuel rod (4), the spacer grid element (18) exhibiting a polygonal cross-section including at least three supporting sides (20) distributed around the extension axis (A),
wherein each supporting side (20) comprises an inwardly protruding corrugation (24),
**characterised in that** at least one spring (32) is formed onto the corrugation (24), the spring (32) being configured for supporting a fuel rod (4) extending through the spacer grid element (18).

2. Spacer grid element according to claim 1, comprising three supporting sides (20) distributed at 120° around the extension axis (A).

3. Spacer grid element according to claim 1 or 2, comprising six supporting sides (20) distributed at 60° around the extension axis (A).

4. Spacer grid element according to any one of the preceding claims, wherein the spacer grid element (18) comprises at least one non-supporting side (22).

5. Spacer grid element according to claim 4, wherein at least one supporting side or each supporting side (22) is located between two non-supporting sides (20).

6. Spacer grid element according to claim 4 or claim 5, wherein at least one non-supporting side or each non-supporting side (22) is flat or comprises an inwardly protruding corrugation (25).

7. Spacer grid element according to any one of the preceding claims, wherein each spring (32) is elongated along the extension axis and/or bridge-like.

8. Spacer grid element according to any one of the preceding claims, wherein at least one spring (32) or each spring (32) is configured for an elongated contact with the fuel rod.

9. Spacer grid element according to any one of the preceding claims, wherein at least one spring (32) or each spring (32) is configured for a point contact with the fuel rod in at least one point of contact.

10. Spacer grid element according to any one of the preceding claims, wherein at least one spring (32) or each spring (32) is configured for a point contact with the fuel rod in one point of contact or two points of contact spaced one from the other along the spring (32)

11. Spacer grid element according to any one of the preceding claims, wherein each spring (32) has a non-rectilinear cross-section in each plane perpendicular to the extension axis (A).

12. Spacer grid element according to any one of the preceding claims, wherein each spring (32) comprises two adjacent wings (38, 40) extending side-by-side along a spring axis (B) and inclined one relative to the other, the wings (38, 40) including a contact wing (38) for contacting the fuel rod (4) and a lateral wing (40) laterally extending the contact wing (38).

13. Spacer grid element according to claim 12, wherein the lateral wing (40) is flat.

14. Spacer grid element according to claim 12 or claim 13, wherein the lateral wing (40) is of varying width along the length of the spring (32).

15. Spacer grid cell according to any one of claims 12 - 14, wherein the contact wing (38) has a convex outer surface defining one contact line (39) adapted to contact the fuel rod (4).

16. Spacer grid element according to any one of claims 12 - 15, wherein the contact wing (38) is of substantially constant width.

17. Spacer grid element according to any one of the preceding claims, wherein the corrugation (24) of each supporting side (20) comprises one contact wall (28) and two lateral connection walls (30) adjacent to the contact wall (28) and inclined relative to the contact wall (28).

18. Spacer grid element according to any one of claims 12 - 17 when taken in combination with claim 17, wherein each spring (32) has a contact wing (38) formed in the contact wall (28) of the corrugation (24) onto which the spring (32) is formed and a lateral wing (40) formed in one connection wall (30) of the corrugation (24) onto which the spring (32) is formed.

19. Spacer grid element according to any one of the preceding claims, comprising two springs (32) formed in the corrugation (24) of each supporting side (20), the two springs (32) extending along each other.

20. Spacer grid element according to claim 19, wherein the two springs (32) formed in the corrugation (24) of each supporting sides (20) are formed between at least three slots (34, 36) including at least one central slot (34) and at least two lateral slots (36), each spring (32) being formed between the at least one central slot (34) and at least one lateral slot (36).

21. Spacer grid element according to claim 20, wherein the lateral slot (36) is D-shaped, C-shaped, I-shaped or S-shaped.

22. Spacer grid element as in any one of the preceding claims, manufactured individually and configured for forming a nuclear fuel assembly spacer grid (14) comprising a plurality of such spacer grid element (18) assembled together.

23. Spacer grid for a nuclear fuel assembly, comprising a plurality of spacer grid elements (18) as defined in claim 22, the spacer grid elements (18) being assembled together to form the spacer grid (14).

24. Spacer grid for a nuclear fuel assembly comprising a plurality of spacer grid elements (18) as defined in any of claims 1 to 21 manufactured in a single piece of material, e.g. by additive manufacturing.

25. Nuclear fuel assembly comprising a bundle of fuel rods (4) and an armature (6) for supporting the fuel rods (4), the armature (6) comprising at least one spacer grid (14) according to claim 23 and/or at least one spacer grid (14) according to claim 24.

## Patentansprüche

1. Abstandsgitterelement für
ein Abstandsgitter (14) für ein Kernbrennstabbündel, wobei das Abstandsgitterelement (18) eine sich entlang einer Erstreckungsachse (A) erstreckende Zelle (17) zur Aufnahme eines Kernbrennstabs (4) definiert, wobei das Abstandsgitterelement (18) einen polygonalen Querschnitt mit mindestens drei um die Erstreckungsachse (A) verteilten Stützseiten (20) aufweist,
wobei jede Stützseite (20) eine nach innen vorspringende Sicke (24) aufweist
**dadurch gekennzeichnet, dass** mindestens eine Feder (32) ausgebildet ist auf der Sicke (24), wobei die Feder (32) zur Abstützung eines Brennstabs (4) konfiguriert ist,
der sich durch das Abstandsgitterelement (18) erstreckt.

2. Abstandsgitterelement nach Anspruch 1, umfassend drei in einem Winkel von 120° um die Erstreckungsachse (A) verteilte Stützseiten (20).

3. Abstandsgitterelement nach Anspruch 1 oder 2, bestehend aus sechs in einem Winkel von 60° um die Erstreckungsachse (A) verteilten Stützseiten (20).

4. Abstandsgitterelement nach einem der vorhergehenden Ansprüche, wobei das Abstandsgitterelement (18) mindestens eine nicht stützende Seite (22) aufweist.

5. Abstandsgitterelement nach Anspruch 4, wobei mindestens eine Stützseite oder jede Stützseite (22) zwischen zwei nicht stützenden Seiten (20) angeordnet ist.

6. Abstandsgitterelement nach Anspruch 4 oder Anspruch 5, wobei mindestens eine nicht stützende Seite oder jede nicht stützende Seite (22) flach ist oder eine nach innen vorspringende Sicke (25) aufweist.

7. Abstandsgitterelement nach einem der vorhergehenden Ansprüche, wobei jede Feder (32) entlang der Erstreckungsachse langgestreckt und/oder brückenartig ausgebildet ist.

8. Abstandsgitterelement nach einem der vorhergehenden Ansprüche, wobei mindestens eine Feder (32) oder jede Feder (32) für einen länglichen Kontakt mit dem Brennstab ausgebildet ist.

9. Abstandsgitterelement nach einem der vorhergehenden Ansprüche, wobei mindestens eine Feder (32) oder jede Feder (32) für eine punktuelle Berührung mit dem Brennstab in mindestens einem Kontaktpunkt ausgebildet ist.

10. Abstandsgitterelement nach einem der vorhergehenden Ansprüche, wobei mindestens eine Feder (32) oder jede Feder (32) für eine punktförmige Berührung mit dem Brennstab in einem Berührungspunkt oder zwei Berührungspunkten, die entlang der Feder (32) voneinander beabstandet sind, ausgebildet ist

11. Abstandsgitterelement nach einem der vorhergehenden Ansprüche, wobei jede Feder (32) in jeder Ebene senkrecht zur Erstreckungsachse (A) einen nicht geradlinigen Querschnitt aufweist.

12. Abstandsgitterelement nach einem der vorhergehenden Ansprüche, wobei jede Feder (32) zwei benachbarte Flügel (38, 40) aufweist, die sich nebeneinander entlang einer Federachse (B) erstrecken und relativ zueinander geneigt sind, wobei die Flügel (38, 40) einen Kontaktflügel (38) zur Kontaktierung des Brennstabs (4) und einen den Kontaktflügel (38) seitlich verlängernden Seitenflügel (40) aufweisen.

13. Abstandsgitterelement nach Anspruch 12, wobei der Seitenflügel (40) flach ist.

14. Abstandsgitterelement nach Anspruch 12 oder Anspruch 13, wobei der Seitenflügel (40) über die Länge der Feder (32) eine unterschiedliche Breite aufweist.

15. Abstandsgitterzelle nach einem der Ansprüche 12 bis 14, wobei der Kontaktflügel (38) eine konvexe Außenfläche aufweist, die eine Kontaktlinie (39) definiert, die zum Kontakt mit dem Brennstab (4) geeignet ist.

16. Abstandsgitterelement nach einem der Ansprüche 12 bis 15, wobei der Kontaktflügel (38) eine im Wesentlichen konstante Breite aufweist.

17. Abstandsgitterelement nach einem der vorhergehenden Ansprüche, wobei die Sicke (24) jeder Stützseite (20) eine Kontaktwand (28) und zwei seitliche, an die Kontaktwand (28) angrenzende und gegenüber der Kontaktwand (28) geneigte Verbindungswände (30) aufweist.

18. Abstandsgitterelement nach einem der Ansprüche 12 bis 17 in Verbindung mit Anspruch 17, wobei jede Feder (32) einen Kontaktflügel (38), der in der Kontaktwand (28) der Sicke (24), an der die Feder (32) ausgebildet ist, ausgebildet ist, und einen Seitenflügel (40), der in einer Verbindungswand (30) der Sicke (24), an der die Feder (32) ausgebildet ist, ausgebildet ist, aufweist.

19. Abstandsgitterelement nach einem der vorhergehenden Ansprüche, mit zwei in der Sicke (24) jeder Stützseite (20) ausgebildeten Federn (32), die sich aneinander entlang erstrecken.

20. Abstandsgitterelement nach Anspruch 19, wobei die beiden in der Sicke (24) jeder Stützseite (20) ausgebildeten Federn (32) zwischen mindestens drei Schlitzen (34, 36) ausgebildet sind, die mindestens einen zentralen Schlitz (34) und mindestens zwei seitliche Schlitze (36) umfassen, wobei jede Feder (32) zwischen dem mindestens einen zentralen Schlitz (34) und mindestens einem seitlichen Schlitz (36) ausgebildet ist.

21. Abstandsgitterelement nach Anspruch 20, wobei der seitliche Schlitz (36) D-, C-, I- oder S-förmig ist.

22. Abstandsgitterelement nach einem der vorhergehenden Ansprüche, das einzeln hergestellt wird und so konfiguriert ist, dass es ein Kernbrennstabbündel-Abstandsgitter (14) bildet, das eine Vielzahl solcher Abstandsgitterelemente (18) umfasst, die zusammengefügt werden.

23. Abstandsgitter für ein Kernbrennstabbündel mit einer Vielzahl von Abstandsgitterelementen (18) nach Anspruch 22, wobei die Abstandsgitterelemente (18) zur Bildung des Abstandsgitters (14) zusammengesetzt sind.

24. Abstandshaltergitter für ein Kernbrennstabbündel, das eine Vielzahl von Abstandsgitterelementen (18) nach einem der Ansprüche 1 bis 21 umfasst, die aus einem einzigen Materialstück, z. B. durch additive Fertigung, hergestellt sind.

25. Kernbrennstabbündel mit einem Bündel von Brennstäben (4) und einem Anker (6) zum Tragen der Brennstäbe (4), wobei der Anker (6) mindestens ein Abstandsgitter (14) nach Anspruch 23 und/oder mindestens ein Abstandsgitter (14) nach Anspruch 24 aufweist.

## Revendications

1. Élément de grille d'espacement pour
une grille d'espacement d'assemblage de combustible nucléaire (14), l'élément de grille d'espacement (18) définissant une cellule (17) s'étendant le long d'un axe d'extension (A) pour recevoir une barre de combustible nucléaire (4), l'élément de grille d'espacement (18) présentant une section transversale polygonale comprenant au moins trois côtés de support (20) répartis autour de l'axe d'extension (A),
dans lequel chaque côté de support (20) comprend une ondulation (24) faisant saillie vers l'intérieur
**caractérisé en ce qu'**au moins un ressort (32) est formé sur l'ondulation (24), le ressort (32) étant configuré pour supporter une barre de combustible (4) s'étendant à travers l'élément de grille d'espacement (18).

2. Élément de grille d'espacement selon la revendication 1, comprenant trois côtés de support (20) répartis à 120° autour de l'axe d'extension (A).

3. Élément de grille d'espacement selon la revendication 1 ou 2, comprenant six côtés de support (20) répartis à 60° autour de l'axe d'extension (A).

4. Élément de grille d'espacement selon l'une quelconque des revendications précédentes, dans lequel l'élément de grille d'espacement (18) comprend au moins un côté non porteur (22).

5. Élément de grille d'espacement selon la revendication 4, dans lequel au moins un côté de support ou chaque côté de support (22) est situé entre deux côtés non porteurs (20).

6. Élément de grille d'espacement selon la revendication 4 ou la revendication 5, dans lequel au moins un côté non porteur ou chaque côté non porteur (22) est plat ou comporte une ondulation (25) faisant saillie vers l'intérieur.

7. Élément de grille d'espacement selon l'une quelconque des revendications précédentes, dans lequel chaque ressort (32) est allongé le long de l'axe d'extension et/ou en forme de pont.

8. Élément de grille d'espacement selon l'une quelconque des revendications précédentes, dans lequel au moins un ressort (32) ou chaque ressort (32) est configuré pour un contact allongé avec la barre de combustible.

9. Élément de grille d'espacement selon l'une quelconque des revendications précédentes, dans lequel au moins un ressort (32) ou chaque ressort (32) est configuré pour un contact ponctuel avec la barre de combustible en au moins un point de contact.

10. Élément de grille d'espacement selon l'une quelconque des revendications précédentes, dans lequel au moins un ressort (32) ou chaque ressort (32) est configuré pour un contact ponctuel avec la barre de combustible en un point de contact ou deux points de contact espacés l'un de l'autre le long du ressort (32).

11. Élément de grille d'espacement selon l'une quelconque des revendications précédentes, dans lequel chaque ressort (32) présente une section transversale non rectiligne dans chaque plan perpendiculaire à l'axe d'extension (A).

12. Élément de grille d'espacement selon l'une quelconque des revendications précédentes, dans lequel chaque ressort (32) comprend deux ailes (38, 40) adjacentes s'étendant côte à côte le long d'un axe de ressort (B) et inclinées l'une par rapport à l'autre, les ailes (38, 40) comprenant une aile de contact (38) pour entrer en contact avec la barre de combustible (4) et une aile latérale (40) prolongeant latéralement l'aile de contact (38).

13. Élément de grille d'espacement selon la revendication 12, dans lequel l'aile latérale (40) est plate.

14. Élément de grille d'espacement selon la revendication 12 ou la revendication 13, dans lequel l'aile latérale (40) est de largeur variable sur la longueur du ressort (32).

15. Cellule à grille d'espacement selon l'une quelconque des revendications 12 à 14, dans laquelle l'aile de contact (38) présente une surface extérieure convexe définissant une ligne de contact (39) adaptée pour entrer en contact avec la barre de combustible (4).

16. Élément de grille d'espacement selon l'une quelconque des revendications 12 à 15, dans lequel l'aile de contact (38) est d'une largeur sensiblement constante.

17. Élément de grille d'espacement selon l'une quelconque des revendications précédentes, dans lequel l'ondulation (24) de chaque côté de support (20) comprend une paroi de contact (28) et deux parois de connexion latérales (30) adjacentes à la paroi de contact (28) et inclinées par rapport à la paroi de contact (28).

18. Elément de grille d'espacement selon l'une quelconque des revendications 12 à 17 en combinaison avec la revendication 17, dans lequel chaque ressort (32) a une aile de contact (38) formée dans la paroi de contact (28) de l'ondulation (24) sur laquelle le ressort (32) est formé et une aile latérale (40) formée dans une paroi de connexion (30) de l'ondulation (24) sur laquelle le ressort (32) est formé.

19. Elément de grille d'espacement selon l'une quelconque des revendications précédentes, comprenant deux ressorts (32) formés dans l'ondulation (24) de chaque côté de support (20), les deux ressorts (32) s'étendant l'un à côté de l'autre.

20. Elément de grille d'espacement selon la revendication 19, dans lequel les deux ressorts (32) formés dans l'ondulation (24) de chaque côté de support (20) sont formés entre au moins trois fentes (34, 36) comprenant au moins une fente centrale (34) et au moins deux fentes latérales (36), chaque ressort (32) étant formé entre l'au moins une fente centrale (34) et au moins une fente latérale (36).

21. Élément de grille d'espacement selon la revendication 20, dans lequel la fente latérale (36) a la forme d'un D, d'un C, d'un 1 ou d'un S.

22. Elément de grille d'espacement selon l'une quelconque des revendications précédentes, fabriqué individuellement et configuré pour former une grille d'espacement d'assemblage de combustible nucléaire (14) comprenant une pluralité de ces éléments de grille d'espacement (18) assemblés ensemble.

23. Grille d'espacement pour un assemblage de combustible nucléaire, comprenant une pluralité d'éléments de grille d'espacement (18) tels que définis dans la revendication 22, les éléments de grille d'espacement (18) étant assemblés pour former la grille d'espacement (14).

24. Grille d'espacement pour un assemblage de combustible nucléaire comprenant une pluralité d'éléments de grille d'espacement (18) tels que définis dans l'une quelconque des revendications 1 à 21, fabriqués en une seule pièce de matériau, par exemple par fabrication additive.

25. Assemblage de combustible nucléaire comprenant un faisceau de barres de combustible (4) et une armature (6) pour supporter les barres de combustible (4), l'armature (6) comprenant au moins une grille d'espacement (14) selon la revendication 23 et/ou au moins une grille d'espacement (14) selon la revendication 24.
